(19) Europäisches Patentamt / European Patent Office / Office européen des brevets

(11) **EP 3 742 624 B1**

(12) **EUROPEAN PATENT SPECIFICATION**

(45) Date of publication and mention
of the grant of the patent:
**16.11.2022 Bulletin 2022/46**

(21) Application number: **18907502.1**

(22) Date of filing: **27.02.2018**

(51) International Patent Classification (IPC):
$H04B\ 7/0413^{(2017.01)}$    $H04L\ 25/06^{(2006.01)}$
$H04B\ 7/04^{(2017.01)}$    $H04L\ 27/38^{(2006.01)}$
$H04L\ 25/03^{(2006.01)}$    $H04B\ 7/0456^{(2017.01)}$

(52) Cooperative Patent Classification (CPC):
**H04L 27/38; H04B 7/0413; H04B 7/0456;
H04L 25/03318; H04L 25/03324; H04L 25/03891;
H04L 25/061;** H04L 2025/03426

(86) International application number:
**PCT/JP2018/007266**

(87) International publication number:
**WO 2019/167125 (06.09.2019 Gazette 2019/36)**

(54) **RECEPTION DEVICE, COMMUNICATION SYSTEM, METHOD FOR CALCULATING A LIKELIHOOD OF A MODULATION SIGNAL, AND COMPUTER PROGRAM PRODUCT COMPRISING A NON -TRANSITORY COMPUTER USABLE MEDIUM**

EMPFANGSEINRICHTUNG, KOMMUNIKATIONSSYSTEM, VERFAHREN ZUM BERECHNEN EINER LIKELIHOOD EINES MODULATIONSSIGNALS, UND COMPUTERPROGRAMMPRODUKT, UMFASSEND EIN NICHT-TRANSITORISCHES COMPUTERNUTZBARES MEDIUM

DISPOSITIF DE RÉCEPTION, SYSTÈME DE COMMUNICATION, PROCÉDÉ DESTINÉ À CALCULER UNE VRAISEMBLANCE D'UN SIGNAL DE MODULATION, ET PRODUIT PROGRAMME INFORMATIQUE COMPRENANT UN SUPPORT NON TRANSITOIRE UTILISABLE PAR UN ORDINATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.11.2020 Bulletin 2020/48**

(73) Proprietor: **Mitsubishi Electric Corporation
Tokyo 100-8310 (JP)**

(72) Inventors:
• **YAMAGUCHI, Kanako
Tokyo 100-8310 (JP)**
• **NISHIMOTO, Hiroshi
Tokyo 100-8310 (JP)**
• **TOMITSUKA, Koji
Tokyo 100-8310 (JP)**

(74) Representative: **Pfenning, Meinig & Partner mbB
Patent- und Rechtsanwälte
Theresienhöhe 11a
80339 München (DE)**

(56) References cited:
**WO-A1-2012/031384**    **WO-A1-2016/202384**
**WO-A1-2018/025400**    **WO-A1-2018/025400**

• **KIM J-H ET AL: "Efficient demodulation scheme for M -ary dual carrier modulation", ELECTRONIC LETTERS, THE INSTITUTION OF ENGINEERING AND TECHNOLOGY, vol. 46, no. 5, 4 March 2010 (2010-03-04), pages 374-376, XP006034991, ISSN: 1350-911X, DOI: 10.1049/EL:20103529**

- **Yamaguchi, Kanako; Gresset, Nicolas; Nishimoto, Hiroshi; Umeda, Shusaku; Tsukamoto, Kaoru; Okazaki, Akihiro; Okamura, Atsushi: "Serial Concatenation Approach of Spectral precoding and DSTBC Encoding 2-dimensional Diversity", IEICE Technical Report. RCS, vol. 115, no. 113, 17 June 2015 (2015-06-17), pages 19-24, XP009522133,**
- **Yamaguchi, Kanako; Nishimoto, Hiroshi; Umeda, Shusaku; Tsukamoto, Kaoru; Okazaki, Akihiro; Sano, Hiroyasu; Okamura, Atsushi: "B-5-20 Reduction in symbol replica candidates for MLD Decoding over spectrally-precoded diversity transmission", Proceedings of the 2016 IEICE Society Conference, 6 December 2016 (2016-12-06), page 290, XP009522135, Sapporo Japan**

# EP 3 742 624 B1

## Description

### Field

The present invention relates to a reception device that receives a multiplexed signal, a communication system including the reception device, a method for calculating a likelihood of a modulation signal which is applied to the reception device, and a computer program product comprising a non-transitory computer usable medium.

### Background

In communication to which a multiband OFDM (Orthogonal Frequency Division Multiplexing) method is applied, a plurality of modulation signals are multiplexed by a precoding matrix or the like and then transmitted. In communication in which signals are multiplexed on the transmitter side, such as communication using the multiband OFDM method, the multiplexed signals need to be separated from each other on the receiver side. As a signal separation method, an MLD (Maximum Likelihood Detection) method is exemplified. In the MLD method, signal separation is performed by obtaining a distance between a reception signal vector and each of candidate signal points and determining a signal point at the shortest distance from the reception signal vector as an estimated signal vector. Non Patent Literature 1 discloses a method to reduce the amount of computation in the MLD method. In the disclosed method, a real component and an imaginary component of a signal are independently determined, and a signal with a real component or imaginary component assumed at a candidate signal point is used to sequentially estimate a real component or an imaginary component of the remaining signals. In that case, the disclosed method reduces the number of candidate signal points to be used for the assumption on the basis of a result of region determination using a reception signal.

WO 2018/025400 A1 relates to a reception device that demultiplexes multiplexed signals, a reception method, and a communication system including such a reception device. The reception device includes: a reception unit receiving transmission signals; a splitting unit splitting received signals into real component and imaginary component; a narrowing unit narrowing down possible signal point candidates of real component of the signal to signal point candidates based on the real component of the split received signal and narrowing down possible signal point candidates of imaginary component of the signal to signal point candidates based on the imaginary component of the split received signal; a signal point candidate hypothesizing unit hypothesizing one signal point candidate of real component from the signal point candidates of real component obtained by narrowing-down and hypothesizing one signal point candidate of imaginary component from the signal point candidates of imaginary component obtained by narrowing-down; and a signal estimation value calculating unit estimating real component of the signal based on the one hypothesized real component signal point candidate and estimating imaginary component of the signal based on the one hypothesized imaginary component signal point candidate.

### Citation List

### Non Patent Literature

Non Patent Literature 1: YAMAGUCHI KANAKO, NISHIMOTO HIROSHI, UMEDA SHUSAKU, TSUKAMOTO KAORU, OKAZAKI AKIHIRO, SANO HIROYASU, OKAMURA ATSUSHI, "A Study on Reduction in Candidate Signal Points of MLD Decoding in Frequency Encoded Diversity Method", 2016 IEICE Society Conference, B-5-20, p.290, 2016.

### Summary

### Technical Problem

However, the method to reduce the amount of computation in the MLD method described in Non Patent Literature 1 has a problem that as the number of multiplexed signals increases, the amount of computation increases.
The present invention has been achieved in view of the above problems, and an object of the present invention is to provide a reception device that can reduce the amount of computation in a signal separation process even when the number of multiplexed signals increases.

### Solution to Problem

The invention is defined in the appended set of claims. In order to solve the above problems and achieve the object, a reception device according to the present invention comprises: a signal division unit to divide a reception signal including a plurality of multiplexed signals respectively into a real component and an imaginary component, the multiplexed signals being obtained by multiplexing a plurality of modulation signals by a real-number precoding matrix, each of the modulation signals having a real component and an imaginary component modulated independently from each other; a first maximum-likelihood point search unit to narrow down candidate signal points, which are obtainable by a real component of the multiplexed signal, to a first candidate signal point by using one of the real components of the reception signal; a second maximum-likelihood point search unit to narrow down candidate signal points, which are obtainable by an imaginary component of the multiplexed signal, to a second candidate signal point by using one of the imaginary components of the reception signal; a first replica-vector calculation unit to calculate a first replica vector by using the first candidate signal point; a second replica-vector calculation unit to calculate a second replica vector by using the second candidate signal point; and a likelihood calculation unit to calculate a likelihood of the modulation signal by using the first replica vector and the second replica vector.

Advantageous Effects of Invention

The reception device according to the present invention has an effect where it is possible to reduce the amount of computation in a signal separation process even when the number of multiplexed signals increases.

Brief Description of Drawings

FIG. 1 is a diagram illustrating a communication system according to an embodiment.
FIG. 2 is a functional block diagram of a signal detection unit according to the embodiment.
FIG. 3 is a diagram illustrating an example of a real component Re(y1) of a complex baseband signal input to a maximum-likelihood point search unit according to the embodiment.
FIG. 4 is a diagram illustrating a configuration example of a control circuit according to the embodiment.
FIG. 5 is a flowchart illustrating an example of processes in a reception device according to the embodiment.

Description of Embodiment

A reception device, a communication system, and a method for calculating a likelihood of a modulation signal according to an embodiment of the present invention will be described in detail below with reference to the accompanying drawings. The present invention is not limited to the embodiment.

Embodiment.

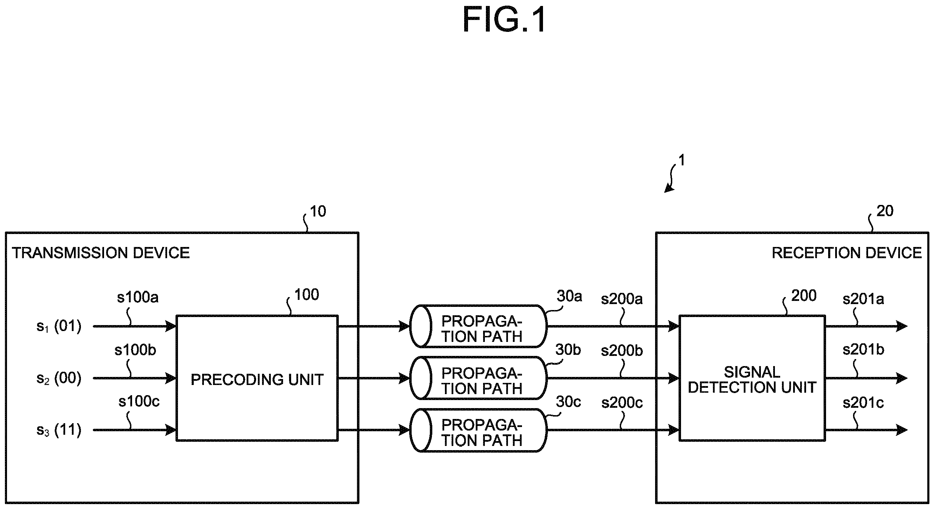

FIG. 1 is a diagram illustrating a communication system according to an embodiment. A communication system 1 includes a transmission device 10 and a reception device 20. The transmission device 10 includes a precoding unit 100. The reception device 20 includes a signal detection unit 200. The precoding unit 100 generates a transmission signal by performing a modulation process and a precoding process on information signals s1, s2, and s3 to be transmitted to the reception device 20. The precoding unit 100 transmits the transmission signal to the reception device 20 through propagation paths 30a, 30b, and 30c. The reception device 20 decodes the information signals s1, s2, and s3 with the signal detection unit 200 performing a signal separation process on the reception signal. In the present embodiment, the transmission device 10 multiplexes a plurality of modulated complex baseband signals by using a real-number precoding matrix, and then transmits the multiplexed signals through propagation paths orthogonal to each other. The propagation paths orthogonal to each other refer to propagation paths that are less likely to interfere with each other, or refer to independent propagation paths that do not interfere with each other. While examples of the propagation paths orthogonal to each other include propagation paths using orthogonal frequencies, the propagation paths orthogonal to each other are not limited thereto.

An operation of the transmission device 10 is described below in detail. The precoding unit 100 performs a modulation process and a multiplexing process on the information signals s1, s2, and s3 received respectively through signal lines s100a, s100b, and s100c. It is assumed that there are three signals to be multiplexed in the multiplexing process performed by the precoding unit 100 according to the present embodiment. Each of the three information signals, input to the precoding unit 100, is modulated by a QPSK (Quadrature Phase Shift Keying) method. The present embodiment is not limited to the QPSK method, but is also applicable to a case where a real component and an imaginary component of a complex baseband signal are modulated independently from each other. In other words, the present embodiment is applicable to a modulation method that can calculate the real component and the imaginary component independently from each other. The number M of signals to be multiplexed in the multiplexing process performed by the precoding unit 100 is not limited to three and it suffices that the number is an integer equal to or larger than 2. The information signals s1, s2, and s3 are, for example, information such as (01), (00), or (11). The precoding unit 100 performs a modulation process on each of the information signals s1, s2, and s3 to generate respective complex baseband signals that are modulation signals z1, z2, and z3. The information signals s1, s2, and s3 uniquely correspond to the modulation signals z1, z2, and z3. That is, the information signal s1 corresponds to the modulation signal z1, the information signal s2 corresponds to the modulation signal z2, and the information signal s3 corresponds to the modulation signal z3. In the following descriptions, either the information signals s1, s2, and s3 or the modulation signals z1, z2, and z3 are used for explanation.

The precoding unit 100 performs a multiplexing process on the modulation signals z1, z2, and z3 on the basis of a real-number precoding matrix included in the precoding unit 100. Three multiplexed radio signals are output from the precoding unit 100 to the propagation paths 30a, 30b, and 30c that are orthogonal to each other. In the precoding unit 100, the modulation signals z1, z2, and z3 are multiplexed by a real-number precoding matrix in which the amount of phase rotation becomes an integral multiple of 90 degrees. In a case where the modulation signals z1, z2, and z3 are transmitted through three propagation paths, the real-number precoding matrix refers to a matrix having already defined therein the mixture ratio of the modulation signals z1, z2, and z3 on their respective propagation paths. The real-number precoding matrix is shared by the transmission device 10 and the reception device 20. The reception device 20 can use the real-number precoding matrix when the reception device 20 decodes a reception signal.

The precoding unit 100 performs a multiplexing process on a complex baseband signal to be transmitted by multiplying a modulation signal vector z, which is a vector value of the complex baseband signal, by a real-number precoding matrix $\phi$, and then transmits the multiplexed signal to a propagation path. That is, a transmission signal vector x that is output by the precoding unit 100 is expressed by the following equation.

[Equation 1]

$$\mathrm{x} = \phi \mathrm{z}$$

$$\begin{bmatrix} x_1 \\ x_2 \\ x_3 \end{bmatrix} = \begin{bmatrix} \phi_{11} & \phi_{12} & \phi_{13} \\ \phi_{21} & \phi_{22} & \phi_{23} \\ \phi_{31} & \phi_{32} & \phi_{33} \end{bmatrix} \begin{bmatrix} z_1 \\ z_2 \\ z_3 \end{bmatrix}$$

$$\cdots (1)$$

When the transmission signal vector x passes through the propagation paths 30a, 30b, and 30c, the transmission signal vector x is influenced by each of the propagation paths 30a, 30b, and 30c. The influence upon the transmission signal vector x can be expressed by a transfer function matrix $\Delta$. The transfer function matrix $\Delta$ can be estimated by the transmission device 10, the reception device 20, or other devices (not illustrated). The reception device 20 has information about this transfer function matrix $\Delta$. A noise vector $\eta$ at an input terminal of the reception device 20 is further added to the transmission signal vector x.

A reception signal vector y, which has been input to the reception device 20 after having been influenced by the propagation paths and noise, is made up of complex baseband signals that are complex baseband signals y1, y2, and y3. The reception signal vector y can be expressed by a complex vector with the number of dimensions equal to the number of propagation paths orthogonal to each other. The complex baseband signal y1 is input to the reception device 20 through the propagation path 30a. The complex baseband signal y2 is input to the reception device 20 through the propagation path 30b. The complex baseband signal y3 is input to the reception device 20 through the propagation path 30c. In the present embodiment, the number of propagation paths orthogonal to each other is three. The reception signal vector y can be expressed by the following equation using: the real-number precoding matrix $\phi$ by which the modulation signal vector z is multiplied in the transmission device 10, the transfer function matrix $\Delta$ of the propagation paths estimated in the reception device 20 and the transmission device 10, the modulation signal vector z, and the noise vector $\eta$ added at the input terminal of the reception device 20.

[Equation 2]

$$y = \Delta \phi z + \eta$$

$$\begin{bmatrix} y_1 \\ y_2 \\ y_3 \end{bmatrix} = \begin{bmatrix} \Delta_1 & 0 & 0 \\ 0 & \Delta_2 & 0 \\ 0 & 0 & \Delta_3 \end{bmatrix} \begin{bmatrix} \phi_{11} & \phi_{12} & \phi_{13} \\ \phi_{21} & \phi_{22} & \phi_{23} \\ \phi_{31} & \phi_{32} & \phi_{33} \end{bmatrix} \begin{bmatrix} z_1 \\ z_2 \\ z_3 \end{bmatrix} + \eta$$

$$\cdots (2)$$

An operation of the reception device 20 is described below in detail. The reception signal vector y is input to the signal detection unit 200. The reception device 20 performs a process to derive the transmitted modulation signal vector z from the reception signal vector y. The signal detection unit 200 has a function of performing signal separation on three input radio signals. The signal detection unit 200 estimates the three separated radio signals, and outputs a likelihood of each of the estimated signals.

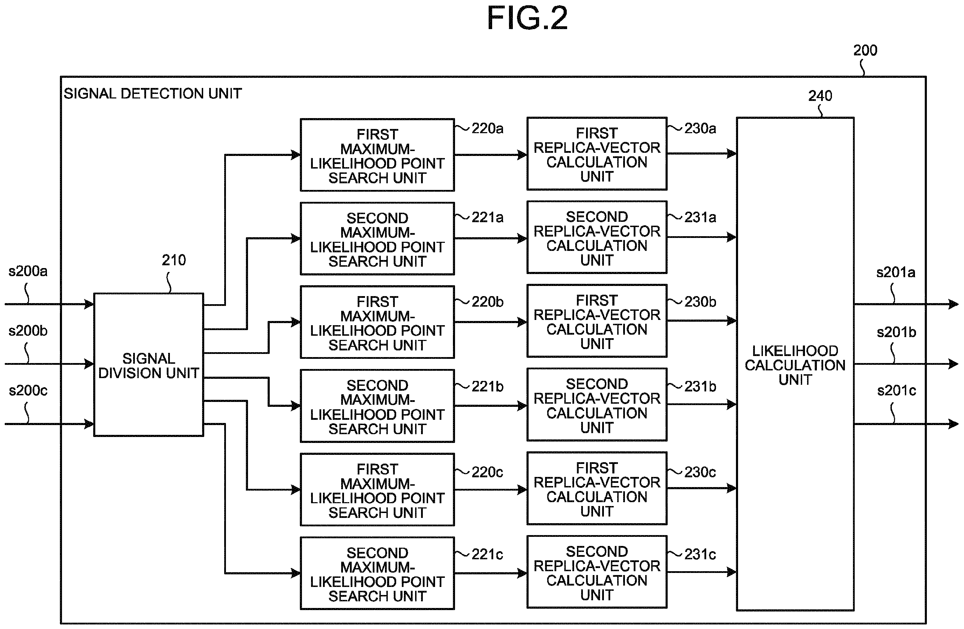

FIG. 2 is a functional block diagram of the signal detection unit 200 according to the embodiment. The signal detection unit 200 includes: a signal division unit 210; first maximum-likelihood point search units 220a to 220c; second maximum-likelihood point search units 221a to 221c; first replica-vector calculation units 230a to 230c; second replica-vector calculation units 231a to 231c; and a likelihood calculation unit 240.

The signal division unit 210 divides each of the complex baseband signals y1, y2, and y3 of the reception signal vector y into a real component and an imaginary component. The reception signal vector y is input to the signal division unit 210 through the signal lines s200a, s200b, and s200c. The complex baseband signal y1 is input to the signal division unit 210 through the signal line s200a. The complex baseband signal y2 is input to the signal division unit 210 through the signal line s200b. The complex baseband signal y3 is input to the signal division unit 210 through the signal line s200c. The signal division unit 210 outputs a real component of the complex baseband signal y1 to the first maximum-likelihood point search unit 220a, and outputs an imaginary component of the complex baseband signal y1 to the second maximum-likelihood point search unit 221a. The signal division unit 210 outputs a real component of the complex baseband signal y2 to the first maximum-likelihood point search unit 220b, and outputs an imaginary component of the complex baseband signal y2 to the second maximum-likelihood point search unit 221b. The signal division unit 210 outputs a real component of the complex baseband signal y3 to the first maximum-likelihood point search unit 220c, and outputs an imaginary component of the complex baseband signal y3 to the second maximum-likelihood point search unit 221c.

The first maximum-likelihood point search unit 220a uses the real component of the complex baseband signal y1 to narrow down candidate signal points, which are obtainable by a real component of a multiplexed signal x1 that is multiplexed by a real-number precoding matrix, to a candidate signal point that is located at the shortest distance from the real component of the complex baseband signal y1. The distance used to narrow down the candidate signal points is the Euclidean distance. The second maximum-likelihood point search unit 221a uses the imaginary component of the complex baseband signal y1 to narrow down candidate signal points, which are obtainable by an imaginary component of the multiplexed signal x1 that is multiplexed by a real-number precoding matrix, to a candidate signal point that is located at the shortest distance from the imaginary component of the complex baseband signal y1. Similarly, the first maximum-likelihood point search unit 220b uses the real component of the complex baseband signal y2 to narrow down candidate signal points, which are obtainable by a real component of a multiplexed signal x2, to a candidate signal point that is located at the shortest distance from the real component of the complex baseband signal y2. The second maximum-likelihood point search unit 221b uses the imaginary component of the complex baseband signal y2 to narrow down candidate signal points, which are obtainable by an imaginary component of the multiplexed signal x2, to a candidate signal point that is located at the shortest distance from the imaginary component of the complex baseband signal y2. The first maximum-likelihood point search unit 220c uses the real component of the complex baseband signal y3 to narrow down candidate signal points, which are obtainable by a real component of a multiplexed signal x3, to a candidate signal point that is located at the shortest distance from the real component of the complex baseband signal y3. The second maximum-likelihood point search unit 221c uses the imaginary component of the complex baseband signal y3 to narrow down candidate signal points, which are obtainable by an imaginary component of the multiplexed signal x3, to a candidate signal point that is located at the shortest distance from the imaginary component of the complex baseband signal y3.

The first maximum-likelihood point search units 220a to 220c output the candidate signal point having been narrowed down to the first replica-vector calculation units 230a to 230c, respectively. The second maximum-likelihood point search units 221a to 221c output the candidate signal point having been narrowed down to the second replica-vector calculation units 231a to 231c, respectively. For example, the first maximum-likelihood point search unit 220a outputs the candidate signal point to the first replica-vector calculation unit 230a. For example, the second maximum-likelihood point search unit 221c outputs the candidate signal point to the second replica-vector calculation unit 231c. The candidate signal point narrowed down by the first maximum-likelihood point search units 220a to 220c is also referred to as "first candidate signal point". The candidate signal point narrowed down by the second maximum-likelihood point search units 221a to 221c is also referred to as "second candidate signal point".

The first replica-vector calculation units 230a to 230c and the second replica-vector calculation units 231a to 231c calculate a plurality of replica vectors corresponding to the modulation signal z1, the modulation signal z2, or the modulation signal z3, which are calculated using an input maximum likelihood point. The replica vectors calculated by the first replica-vector calculation units 230a to 230c are also referred to as "first replica vector". The replica vectors calculated by the second replica-vector calculation units 231a to 231c are also referred to as "second replica vector". The first replica-vector calculation units 230a to 230c output the replica vectors calculated using the maximum likelihood point, and a plurality of vectors to the likelihood calculation unit 240 as a group of replica vectors. The plurality of vectors are made up of a candidate signal point, located at the shortest distance from a real component of the complex baseband signal y1, of the complex baseband signal y2, or of the complex baseband signal y3 having been respectively input to the first maximum-likelihood point search units 220a to 220c, among candidate signal points with an inverted value at each bit of the maximum likelihood point. Similarly, the second replica-vector calculation units 231a to 231c output the replica vectors calculated using the maximum likelihood point, and a plurality of vectors to the likelihood calculation unit 240 as a group of replica vectors. The plurality of vectors are made up of a candidate signal point, located at the shortest distance from an imaginary component of the complex baseband signal y1, of the complex baseband signal y2, or of the complex baseband signal y3 having been respectively input to the second maximum-likelihood point search units 221a to 221c, among candidate signal points with an inverted value at each bit of the maximum likelihood point.

For example, the first replica-vector calculation unit 230a uses a maximum likelihood point located at the shortest distance from the real component of the complex baseband signal y1 to calculate a replica vector corresponding to the multiplexed signal x1. The first replica-vector calculation unit 230a outputs the calculated replica vector and a plurality of vectors to the likelihood calculation unit 240 as a group of replica vectors. The plurality of vectors are made up of a candidate signal point, which is located at the shortest distance from a real component of the complex baseband signal y1 having been input to the first maximum-likelihood point search unit 220a, among candidate signal points with an inverted value at each bit of the maximum likelihood point.

The likelihood calculation unit 240 calculates a likelihood corresponding to each of the modulation signals z1, z2, and z3 using a plurality of input replica vectors. The likelihood calculation unit 240: outputs a likelihood corresponding to the modulation signal z1 through the signal line s201a; outputs a likelihood corresponding to the modulation signal z2 through the signal line s201b; and outputs a likelihood corresponding to the modulation signal z3 through the signal line s201c.

An operation of the signal detection unit 200 is described below in detail. Initially, the first maximum-likelihood point search units 220a to 220c and the second maximum-likelihood point search units 221a to 221c narrow down candidate signal points, which are obtainable by a real component and an imaginary component of each of the multiplexed signals x1, x2, and x3, to a candidate signal point located at the shortest distance from each of the complex baseband signals y1, y2, and y3 using a real component and an imaginary component of each of the input complex baseband signals y1, y2, and y3.

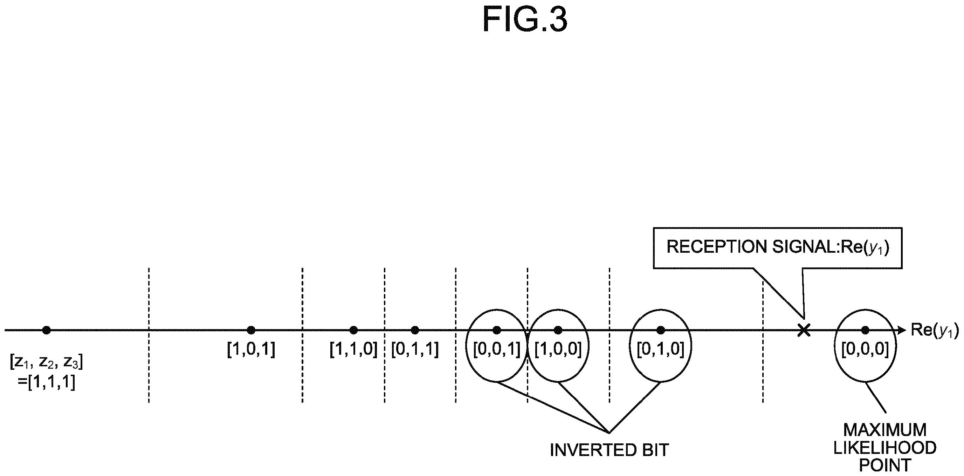

The present embodiment deals with a case where the QPSK method is applied as a modulation method for the modulation signals z1, z2, and z3. Thus, all the candidate signal points that are obtainable by real components $Re(z1)$, $Re(z2)$, and $Re(z3)$ of the modulation signals are $2\times2\times2=8$ types ([z1, z2, z3]=[0, 0, 0], [0, 0, 1], [0, 1, 1], [0, 1, 0], [1, 0, 0], [1, 0, 1], [1, 1, 1], [1, 1, 0]). FIG. 3 illustrates locations of signal points where the horizontal axis represents a real component $Re(y1)$ of a complex baseband signal.

FIG. 3 is a diagram illustrating an example of the real component $Re(y1)$ of a complex baseband signal input to the first maximum-likelihood point search unit 220a according to the embodiment. In FIG. 3, the black spot illustrates a real component $Re(x1)$ of a multiplexed signal. When the real component $Re(y1)$ is illustrated as a point marked with "$\times$", a candidate point [0, 0, 0] for the real component $Re(x1)$ of the multiplexed signal is located at the shortest distance from the real component $Re(y1)$. For this reason, the candidate point [0, 0, 0] is optimal as a maximum likelihood point of the real component $Re(y1)$. Thus, the first maximum-likelihood point search unit 220a outputs the signal point [0, 0, 0] as a maximum likelihood point to the first replica-vector calculation unit 230a.

In addition to the maximum likelihood point, information about an inverted bit at each bit of the maximum likelihood point is necessary for the likelihood calculation unit 240 to output a likelihood of a modulation signal. In addition to the maximum likelihood point [0, 0, 0] input from the first maximum-likelihood point search unit 220a, the first replica-vector calculation unit 230a also outputs candidate signal points [0, 1, 0], [1, 0, 0], and [0, 0, 1], which are located at the shortest distance from the maximum likelihood point, among candidate signal points including an inverted bit at each bit of the maximum likelihood point, as replica vectors to the likelihood calculation unit 240.

In the present embodiment, the candidate signal points are narrowed down to determine which one of them becomes the maximum likelihood point for the real component $Re(y1)$ of a complex baseband signal by determining in which of the regions, defined by dotted lines illustrated on the signal-point location diagram in FIG. 3, the real component $Re(y1)$ of the complex baseband signal is included. The regions can be calculated on the basis of locations of the candidate signal points. For example, it is possible to calculate the regions defined by the dotted lines on the basis of the distance between the adjacent candidate signal points of the real component $Re(x1)$ of the multiplexed signal x1 that is multiplexed by a real-number precoding matrix. It is also possible to calculate which of the candidate signal points is selected as an inverted bit to the maximum likelihood point for the real component $Re(y1)$ of the complex baseband signal, on the basis of locations of the signal points of the real component $Re(x1)$ of the multiplexed signal illustrated in FIG. 3. It is allowable that the first maximum-likelihood point search units 220a to 220c, the second maximum-likelihood point search units 221a to 221c, the first replica-vector calculation units 230a to 230c, and the second replica-vector calculation units 231a to 231c do not calculate information about the regions defined by the dotted lines or information about the locations of candidate signal points. For example, the transmission device 10 may calculate information about the regions defined by the dotted lines, and information about the locations of candidate signal points, so that the calculated information may be shared between the transmission device 10 and the reception device 20.

Similarly, the first maximum-likelihood point search units 220b and 220c, and the second maximum-likelihood point search units 221a to 221c search a maximum likelihood point on the basis of the real components Re(y2) and Re(y3) and imaginary components Im(y1), Im(y2), and Im(y3) of respective complex baseband signals. The first replica-vector calculation units 230b and 230c, and the second replica-vector calculation units 231a to 231c calculate a replica vector on the basis of the searched maximum likelihood point.

The present embodiment deals with a case where three modulation signals modulated by the QPSK method are multiplexed by a real-number precoding matrix. Thus, each of the six replica-vector calculation units outputs four replica vectors. Accordingly, 24 replica vectors are output in total. Similarly, in a case where M modulation signals, obtained by modulating an information signal of N bits using a modulation method for modulating a real component and an imaginary component independently, are multiplexed by a real-number precoding matrix, then each of 2M replica-vector calculation units outputs (NM/2+1) replica vectors. Accordingly, (NM$^2$+2M) replica vectors are output in total. In a case where a modulation signal has a value of only the real component or a value of only the imaginary component as modulated by the BPSK (Binary Phase Shift Keying) method, each of M replica-vector calculation units outputs (NM/2+1) replica vectors. Accordingly, (NM$^2$/2+M) replica vectors are output in total.

The likelihood calculation unit 240 calculates a likelihood corresponding to each bit of the modulation signals z1, z2, and z3 using all the replica vectors calculated by the first replica-vector calculation units 230a to 230c and the second replica-vector calculation units 231a to 231c. The likelihood calculation unit 240 outputs the calculated likelihoods respectively through the signal lines s201a, s201b, and s201c. Likelihood calculation can use the existing method in which the probability of occurrence of 0 and 1 at each bit is calculated on the basis of the shortest distance from a reception signal vector.

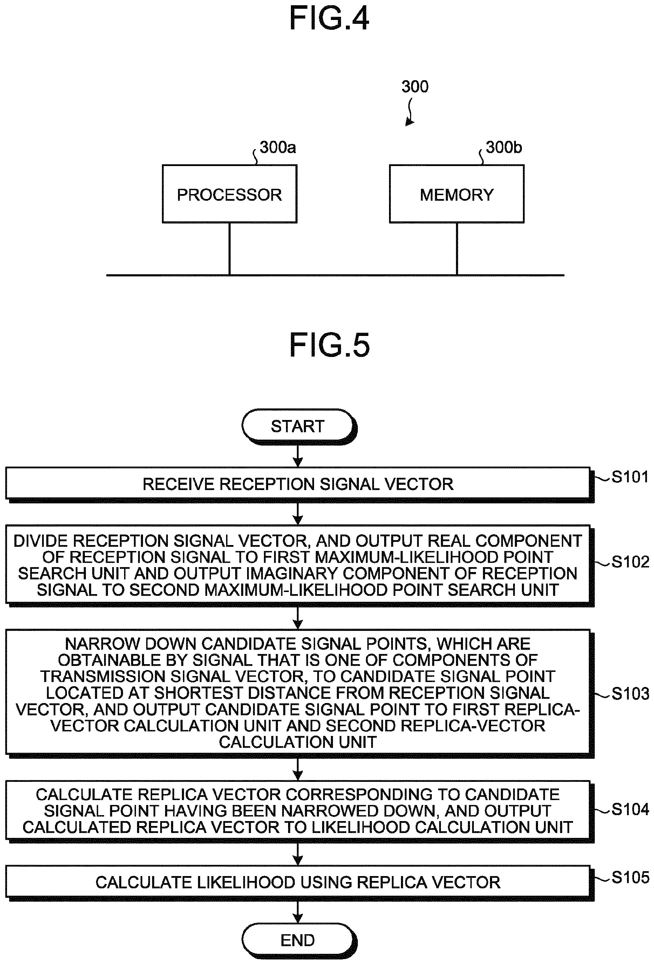

Descriptions are made of a hardware configuration of the signal detection unit 200, the signal division unit 210, the first maximum-likelihood point search units 220a to 220c, the second maximum-likelihood point search units 221a to 221c, the first replica-vector calculation units 230a to 230c, the second replica-vector calculation units 231a to 231c, and the likelihood calculation unit 240 according to the present embodiment. FIG. 4 is a diagram illustrating a configuration example of a control circuit according to the embodiment. The signal detection unit 200, the signal division unit 210, the first maximum-likelihood point search units 220a to 220c, the second maximum-likelihood point search units 221a to 221c, the first replica-vector calculation units 230a to 230c, the second replica-vector calculation units 231a to 231c, and the likelihood calculation unit 240 are implemented by a processing circuit that is an electronic circuit to perform each process.

It is allowable that this processing circuit is either dedicated hardware, or a control circuit including a memory and a CPU (Central Processing Unit) that executes a program stored in the memory. For example, the memory described herein is a nonvolatile or volatile semiconductor memory such as a RAM (Random Access Memory), a ROM (Read Only Memory), or a flash memory, or is a magnetic disk or an optical disk. In a case where this processing circuit is a control circuit including the CPU, this control circuit is, for example, a control circuit 300 that is configured as illustrated in FIG. 4.

As illustrated in FIG. 4, the control circuit 300 includes a processor 300a that is a CPU, and a memory 300b. In a case where the processing circuit is implemented by the control circuit 300 illustrated in FIG. 4, the processor 300a reads and executes a program that is stored in the memory 300b, and that corresponds to each process, thereby implementing the processing circuit. The memory 300b is also used as a temporary memory for the processor 300a to perform each process.

A process flow of the reception device 20 according to the present embodiment is described below. FIG. 5 is a flowchart illustrating an example of the processes in the reception device 20 according to the present embodiment.

The signal detection unit 200 receives the reception signal vector y through the signal lines s200a, s200b, and s200c (Step S101).

When the signal detection unit 200 receives the reception signal vector y, the signal division unit 210 divides each of the complex baseband signals y1, y2, and y3 making up the reception signal vector y into a real component and an imaginary component. The signal division unit 210: outputs a real component of the complex baseband signal y1 to the first maximum-likelihood point search unit 220a; outputs an imaginary component of the complex baseband signal y1 to the second maximum-likelihood point search unit 221a; outputs a real component of the complex baseband signal y2 to the first maximum-likelihood point search unit 220b; outputs an imaginary component of the complex baseband signal y2 to the second maximum-likelihood point search unit 221b; outputs a real component of the complex baseband signal y3 to the first maximum-likelihood point search unit 220c; and outputs an imaginary component of the complex baseband signal y3 to the second maximum-likelihood point search unit 221c (Step S102). Step S102 is also referred to as "first step".

The first maximum-likelihood point search units 220a to 220c and the second maximum-likelihood point search units 221a to 221c narrow down candidate signal points, which are obtainable by a signal that is one of the components of the transmission signal vector x multiplexed by a real-number precoding matrix, to a candidate signal point located at the shortest distance from the reception signal vector y, and then output the candidate signal point to the first replica-vector calculation units 230a to 230c and the second replica-vector calculation units 231a to 231c (Step S103). Step S103 performed by the first maximum-likelihood point search units 220a to 220c is also referred to as "second step". Step S103 performed by the second maximum-likelihood point search units 221a to 221c is also referred to as "third step".

On the basis of the candidate signal point, the first replica-vector calculation units 230a to 230c and the second replica-vector calculation units 231a to 231c calculate a plurality of replica vectors having a maximum likelihood point or having an inverted bit to the candidate signal point, and then output the calculated replica vectors to the likelihood calculation unit 240 (Step S104). Step S104 performed by the first replica-vector calculation units 230a to 230c is also referred to as "fourth step". Step S104 performed by the second replica-vector calculation units 231a to 231c is also referred to as "fifth step".

The likelihood calculation unit 240 calculates a likelihood of the modulation signal vector z using a plurality of replica vectors output from the first replica-vector calculation units 230a to 230c and the second replica-vector calculation units 231a to 231c (Step S105). Step S105 is also referred to as "sixth step".

As described above, in the present embodiment, the reception device 20 performs signal separation on a real component and an imaginary component of a reception signal. Particularly in the signal separation, on the basis of a value of each component of the reception signal, candidate signal points, which are obtainable by a multiplexed signal that is multiplexed by a real-number precoding matrix, are narrowed down independently to a candidate signal point located at the shortest distance from the reception signal vector. Then, a replica vector is calculated from this candidate signal point having been narrowed down, and the calculated replica vector is used to calculate a likelihood. This makes it possible for the reception device 20 to decode the frequency with a smaller amount of computation even when a greater number of signals are multiplexed.

It is also allowable that the signal detection unit 200 is provided with maximum-likelihood point search units and replica-vector calculation units corresponding to the possible maximum number of signals to be multiplexed, so that the signal detection unit 200 adjusts the number of maximum-likelihood point search units and replica-vector calculation units to be used in accordance with the number of signals to be multiplexed, and then calculates a likelihood. Alternatively, it is allowable that the signal detection unit 200 is provided with one maximum-likelihood point search unit and one replica-vector calculation unit, and repeatedly performs the processes in accordance with the number of signals to be multiplexed so that a single system deals with a plurality of number of signals to be multiplexed.

The configurations described in the above embodiment are only examples of the content of the present invention. The configurations can be combined with other well-known techniques, and part of each of the configurations can be omitted or modified without departing from the scope of the present invention as set out in the appended claims.

Reference Signs List

1 communication system, 10 transmission device, 20 reception device, s100a, s100b, s100c, s200a, s200b, s200c, s201a, s201b, s201c signal line, 100 precoding unit, 30a, 30b, 30c propagation path, 200 signal detection unit, 210 signal division unit, 220a to 220c first maximum-likelihood point search unit, 221a to 221c second maximum-likelihood point search unit, 230a to 230c first replica-vector calculation unit, 231a to 231c second replica-vector calculation unit, 240 likelihood calculation unit, 300 control circuit, 300a processor, 300b memory.

**Claims**

1. A reception device (20) comprising:

   a signal division unit (210) configured to receive a plurality of multiplexed signals through propagation paths (30a, 30b, 30c) orthogonal to each other as a plurality of complex baseband signals, and to divide each complex baseband signal of the plurality of complex baseband signals into a real component and an imaginary component and output the real component and the imaginary component of each complex baseband signal, the multiplexed signals being obtained by multiplexing a plurality of modulation signals by a real-number precoding matrix, each of the modulation signals having a real component and an imaginary component modulated independently from each other;

   for each complex baseband signal:

      a) a first maximum-likelihood point search unit (220a, 220b, 220c) configured to input the real component of the complex baseband signal, and to narrow down candidate signal points, which are obtainable by a real component of the multiplexed signal corresponding to the complex baseband signal, to a first candidate signal point by using the real component of the complex baseband signal;
      b) a second maximum-likelihood point search unit (221a, 221b, 221c) configured to input the imaginary component of the complex baseband signal, and to narrow down candidate signal points, which are obtainable by an imaginary component of the multiplexed signal corresponding to the complex baseband signal, to a second candidate signal point by using the imaginary component of the complex baseband signal;

c) a first replica-vector calculation unit (230a, 230b, 230c) configured to calculate and output a first replica vector by using the first candidate signal point corresponding to the complex baseband signal, and to output candidate signal points located at a shortest distance from the first candidate signal point among candidate signal points including each inverted bit of the first candidate signal point; and

d) a second replica-vector calculation unit (231a, 231b, 231c) configured to calculate and output a second replica vector by using the second candidate signal point corresponding to the complex baseband signal, and to output candidate signal points located at a shortest distance from the second candidate signal point among candidate signal points including each inverted bit of the second candidate signal point; and

the reception device (20) further comprising
a likelihood calculation unit (240) configured to calculate a likelihood of the modulation signal by using all the first replica vectors and the second replica vectors.

2. The reception device (20) according to claim 1, wherein

the multiplexed signals are signals with a different mixture ratio of the modulation signals respectively on the propagation paths (30a, 30b, 30c),
the first maximum-likelihood point search unit (220a, 220b, 220c) selects the first candidate signal point from among candidate signal points which are obtainable by a real component of the multiplexed signal, and
the second maximum-likelihood point search unit (221a, 221b, 221c) selects the second candidate signal point from among candidate signal points which are obtainable by an imaginary component of the multiplexed signal.

3. The reception device (20) according to claim 1 or 2, wherein

the first maximum-likelihood point search unit (220a, 220b, 220c) narrows down the first candidate signal points, which are obtainable by a real component of the multiplexed signal, to the first candidate signal point by selecting a candidate signal point located at a shortest distance from the real component of the complex baseband signal, and
the second maximum-likelihood point search unit (221a, 221b, 221c) narrows down the second candidate signal points, which are obtainable by an imaginary component of the multiplexed signal, to the second candidate signal point by selecting a candidate signal point located at a shortest distance from the imaginary component of the complex baseband signal.

4. A communication system (1) comprising:

a transmission device (10) configured to transmit a plurality of multiplexed signals obtained by multiplexing a plurality of modulation signals by a real-number precoding matrix, each of the modulation signals having a real component and an imaginary component modulated independently from each other; and
the reception device (20) according to any one of claims 1 to 3 to receive a signal transmitted from the transmission device (10).

5. A method for calculating a likelihood of a modulation signal in a reception device (20), the method comprising:

a first step of receiving a plurality of multiplexed signals through propagation paths orthogonal to each other as a plurality of complex baseband signals, and dividing each complex baseband signal of the plurality of complex baseband signals into a real component and an imaginary component, the multiplexed signals being obtained by multiplexing a plurality of modulation signals by a real-number precoding matrix, each of the modulation signals having a real component and an imaginary component modulated independently from each other;

for each complex baseband signal:

a second step of narrowing down candidate signal points, which are obtainable by a real component of the multiplexed signal corresponding to the complex baseband signal, to a first candidate signal point by using the real component of the complex baseband signal;
a third step of narrowing down candidate signal points, which are obtainable by an imaginary component of the multiplexed signal corresponding to the complex baseband signal, to a second candidate signal point by using the imaginary component of the complex baseband signal;

a fourth step of calculating and outputting a first replica vector by using the first candidate signal point corresponding to the complex baseband signal, and outputting candidate signal points located at a shortest distance from the first candidate signal point among candidate signal points including each inverted bit of the first candidate signal point; and

a fifth step of calculating and outputting a second replica vector by using the second candidate signal point corresponding to the complex baseband signal, and outputting candidate signal points located at a shortest distance from the second candidate signal point among candidate signal points including each inverted bit of the second candidate signal point; and

the method further comprising

a sixth step of calculating a likelihood of the modulation signal by using all the first replica vectors and the second replica vectors.

6. A computer program product comprising a non-transitory computer usable medium (300b) having a computer readable program that causes a processor (300a) included in a control circuit (300) to implement all the method steps of claim 5 when the computer readable program is run on the processor.

## Patentansprüche

1. Empfangseinrichtung (20), umfassend:

eine Signalteilungseinheit (210), die eingerichtet ist, eine Vielzahl von gemultiplexten Signalen über zueinander orthogonale Ausbreitungspfade (30a, 30b, 30c) als eine Vielzahl von komplexen Basisbandsignalen zu empfangen, und jedes komplexe Basisbandsignal der Vielzahl von komplexen Basisbandsignalen in eine reelle Komponente und eine imaginäre Komponente zu unterteilen, und die reelle Komponente und die imaginäre Komponente jedes komplexen Basisbandsignals auszugeben, wobei die gemultiplexten Signale durch Multiplexen einer Vielzahl von Modulationssignalen durch eine Relle-Zahl-Präcodiermatrix erhalten werden, wobei jedes der Modulationssignale eine reelle Komponente und eine imaginäre Komponente aufweist, die unabhängig voneinander moduliert sind;
für jedes komplexe Basisbandsignal:

a) eine erste Maximum-Likelihood-Punktsucheinheit (220a, 220b, 220c), die eingerichtet ist, die reelle Komponente des komplexen Basisbandsignals einzugeben, und Kandidatensignalpunkte, die durch eine reelle Komponente des gemultiplexten Signals entsprechend dem komplexen Basisbandsignal erhalten werden können, auf einen ersten Kandidatensignalpunkt unter Verwendung der reellen Komponente des komplexen Basisbandsignals einzugrenzen;
b) eine zweite Maximum-Likelihood-Punktsucheinheit (221a, 221b, 221c), die eingerichtet ist, die imaginäre Komponente des komplexen Basisbandsignals einzugeben, und Kandidatensignalpunkte, die durch eine imaginäre Komponente des gemultiplexten Signals entsprechend dem komplexen Basisbandsignal erhalten werden können, auf einen zweiten Kandidatensignalpunkt unter Verwendung der imaginären Komponente des komplexen Basisbandsignals einzugrenzen;
c) eine erste Replikationsvektor-Berechnungseinheit (230a, 230b, 230c), die eingerichtet ist, einen ersten Replikationsvektor unter Verwendung des ersten Kandidatensignalpunkts, der dem komplexen Basisbandsignal entspricht, zu berechnen und auszugeben, und Kandidatensignalpunkte, die sich in einem kürzesten Abstand von dem ersten Kandidatensignalpunkt befinden, unter Kandidatensignalpunkten, enthaltend jedes invertierte Bit des ersten Kandidatensignalpunkts, auszugeben; und
d) eine zweite Replikationsvektor-Berechnungseinheit (231a, 231b, 231c), die eingerichtet ist, einen zweiten Replikationsvektor unter Verwendung des zweiten Kandidatensignalpunkts, der dem komplexen Basisbandsignal entspricht, zu berechnen und auszugeben, und Kandidatensignalpunkte, die sich in einem kürzesten Abstand von dem zweiten Kandidatensignalpunkt befinden, unter Kandidatensignalpunkten, enthaltend jedes invertierte Bit des zweiten Kandidatensignalpunkts, auszugeben; und wobei die Empfangseinrichtung (20) ferner umfasst:
eine Likelihood-Berechnungseinheit (240), die eingerichtet ist, eine Likelihood des Modulationssignals unter Verwendung aller ersten Replikationsvektoren und zweiten Replikationsvektoren zu berechnen.

2. Empfangseinrichtung (20) nach Anspruch 1, wobei:

die gemultiplexten Signale mit einem unterschiedlichen Mischungsverhältnis der Modulationssignale auf den jeweiligen Ausbreitungspfaden (30a, 30b, 30c) sind,
die erste Maximum-Likelihood-Punktsucheinheit (220a, 220b, 220c) den ersten Kandidatensignalpunkt aus Kandidatensignalpunkten auswählt, die durch eine reelle Komponente des gemultiplexten Signals erhalten werden können, und
die zweite Maximum-Likelihood-Punktsucheinheit (221a, 221b, 221c) den zweiten Kandidatensignalpunkt aus Kandidatensignalpunkten auswählt, die durch eine imaginäre Komponente des gemultiplexten Signals erhalten werden können.

3. Empfangseinrichtung (20) nach Anspruch 1 oder 2, wobei:

die erste Maximum-Likelihood-Punktsucheinheit (220a, 220b, 220c) die ersten Kandidatensignalpunkte, die durch eine reelle Komponente des gemultiplexten Signals erhalten werden können, auf den ersten Kandidatensignalpunkt eingrenzt durch Auswählen eines Kandidatensignalpunkts, der sich in einem kürzesten Abstand von der reellen Komponente des komplexen Basisbandsignals befindet, und
die zweite Maximum-Likelihood-Punktsucheinheit (221a, 221b, 221c) die zweiten Kandidatensignalpunkte, die durch eine imaginäre Komponente des gemultiplexten Signals erhalten werden können, auf den zweiten Kandidatensignalpunkt eingrenzt durch Auswählen eines Kandidatensignalpunkts, der sich in einem kürzesten Abstand von der imaginären Komponente des komplexen Basisbandsignals befindet.

4. Kommunikationssystem (1), umfassend:

eine Übertragungseinrichtung (10), die eingerichtet ist, eine Vielzahl von gemultiplexten Signalen, die durch Multiplexen einer Vielzahl von Modulationssignalen durch eine Relle-Zahl-Präkodiermatrix erhalten werden, zu übertragen, wobei jedes der Modulationssignale eine reelle Komponente und eine imaginäre Komponente aufweist, die unabhängig voneinander moduliert sind; und
die Empfangseinrichtung (20) nach einem der Ansprüche 1 bis 3, um ein von der Übertragungseinrichtung (10) übertragenes Signal zu empfangen.

5. Verfahren zum Berechnen einer Likelihood eines Modulationssignals in einer Empfangseinrichtung (20), wobei das Verfahren umfasst:

einen ersten Schritt des Empfangens einer Vielzahl von gemultiplexten Signalen über zueinander orthogonale Ausbreitungspfade als eine Vielzahl von komplexen Basisbandsignalen, und Aufteilens jedes komplexen Basisbandsignals der Vielzahl von komplexen Basisbandsignalen in eine reelle Komponente und eine imaginäre Komponente, wobei die gemultiplexten Signale durch Multiplexen einer Vielzahl von Modulationssignalen durch eine Reelle-Zahl-Präkodiermatrix erhalten werden, wobei jedes der Modulationssignale eine reelle Komponente und eine imaginäre Komponente aufweist, die unabhängig voneinander moduliert sind;
für jedes komplexe Basisbandsignal:

einen zweiten Schritt des Eingrenzens von Kandidatensignalpunkten, die durch eine reelle Komponente des gemultiplexten Signals entsprechend dem komplexen Basisbandsignal erhalten werden können, auf einen ersten Kandidatensignalpunkt unter Verwendung der reellen Komponente des komplexen Basisbandsignals;
einen dritten Schritt des Eingrenzens von Kandidatensignalpunkten, die durch eine imaginäre Komponente des gemultiplexten Signals entsprechend dem komplexen Basisbandsignal erhalten werden können, auf einen zweiten Kandidatensignalpunkt unter Verwendung der imaginären Komponente des komplexen Basisbandsignals;
einen vierten Schritt des Berechnens und Ausgebens eines ersten Replikationsvektors unter Verwendung des ersten Kandidatensignalpunkts, der dem komplexen Basisbandsignal entspricht, und Ausgebens von Kandidatensignalpunkten, die sich in einem kürzesten Abstand von dem ersten Kandidatensignalpunkt befinden, unter Kandidatensignalpunkten, die jedes invertierte Bit des ersten Kandidatensignalpunkts enthalten; und
einen fünften Schritt des Berechnens und Ausgebens eines zweiten Replikationsvektors unter Verwendung des zweiten Kandidatensignalpunkts, der dem komplexen Basisbandsignal entspricht, und Ausgebens von Kandidatensignalpunkten, die sich in einem kürzesten Abstand von dem zweiten Kandidatensignalpunkt befinden, unter Kandidatensignalpunkten, die jedes invertierte Bit des zweiten Kandidatensignalpunkts enthalten; und

wobei das Verfahren ferner umfasst:
einen sechsten Schritt des Berechnens einer Likelihood des Modulationssignals unter Verwendung aller ersten Replikationsvektoren und zweiten Replikationsvektoren.

**6.** Computerprogrammprodukt, umfassend ein nicht-transitorisches computernutzbares Medium (300b) mit einem computerlesbaren Programm, das einen in einer Steuerschaltung (300) enthaltenen Prozessor (300a) veranlasst, alle Verfahrensschritte von Anspruch 5 zu implementieren, wenn das computerlesbare Programm auf dem Prozessor ausgeführt wird.

**Revendications**

**1.** Dispositif de réception (20) comprenant :

une unité de division de signal (210), configurée afin de recevoir une pluralité de signaux multiplexés, par l'intermédiaire de chemins de propagation (30a, 30b, 30c) orthogonaux les uns aux autres, en tant que pluralité de signaux en bande de base complexes, et de diviser chaque signal en bande de base complexe de la pluralité de signaux en bande de base complexes, en une composante réelle et en une composante imaginaire, et de délivrer en sortie la composante réelle et la composante imaginaire de chaque signal en bande de base complexe, les signaux multiplexés étant obtenus en multiplexant une pluralité de signaux de modulation par une matrice de précodage de nombre réel, chacun des signaux de modulation présentant une composante réelle et une composante imaginaire modulées indépendamment l'une de l'autre ;
pour chaque signal en bande de base complexe :

a) une première unité de recherche de point de vraisemblance maximale (220a, 220b, 220c), configurée afin d'entrer la composante réelle du signal en bande de base complexe, et de réduire les points de signaux candidats, pouvant être obtenus par une composante réelle du signal multiplexé correspondant au signal en bande de base complexe, à un premier point de signal candidat en utilisant la composante réelle du signal en bande de base complexe ;
b) une seconde unité de recherche de point de vraisemblance maximale (221a, 221b, 221c), configurée afin d'entrer la composante imaginaire du signal en bande de base complexe, et de réduire les points de signaux candidats, pouvant être obtenus par une composante imaginaire du signal multiplexé correspondant au signal en bande de base complexe, à un second point de signal candidat en utilisant la composante imaginaire du signal en bande de base complexe ;
c) une première unité de calcul de vecteur de réplique (230a, 230b, 230c), configurée afin de calculer et de délivrer en sortie un premier vecteur de réplique en utilisant le premier point de signal candidat correspondant au signal en bande de base complexe, et de délivrer en sortie les points de signaux candidats situés à la distance la plus courte à partir du premier point de signal candidat, parmi des points de signaux candidats comprenant chaque bit inversé du premier point de signal candidat ; et
d) une seconde unité de calcul de vecteur de réplique (231a, 231b, 231c), configurée afin de calculer et de délivrer en sortie un second vecteur de réplique en utilisant le second point de signal candidat correspondant au signal en bande de base complexe, et de délivrer en sortie les points de signaux candidats situés à la distance la plus courte à partir du second point de signal candidat, parmi des points de signaux candidats comprenant chaque bit inversé du second point de signal candidat ; et le dispositif de réception (20) comprenant en outre :
une unité de calcul de vraisemblance (240), configurée afin de calculer une vraisemblance du signal de modulation en utilisant tous les premiers vecteurs de réplique et les seconds vecteurs de réplique.

**2.** Dispositif de réception (20) selon la revendication 1, dans lequel

les signaux multiplexés sont des signaux qui présentent une proportion de mélange différente des signaux de modulation respectivement sur les chemins de propagation (30a, 30b, 30c),
la première unité de recherche de point de vraisemblance maximale (220a, 220b, 220c) sélectionne le premier point de signal candidat parmi les points de signaux candidats qui peuvent être obtenus par une composante réelle du signal multiplexé, et
la seconde unité de recherche de point de vraisemblance maximale (221a, 221b, 221c) sélectionne le second point de signal candidat parmi les points de signaux candidats qui peuvent être obtenus par une composante imaginaire du signal multiplexé.

**3.** Dispositif de réception (20) selon la revendication 1 ou 2, dans lequel

la première unité de recherche de point de vraisemblance maximale (220a, 220b, 220c) réduit les premiers points de signaux candidats, qui peuvent être obtenus par une composante réelle du signal multiplexé, au premier point de signal candidat en sélectionnant le point de signal candidat situé à la distance la plus courte à partir de la composante réelle du signal en bande de base complexe, et

la seconde unité de recherche de point de vraisemblance maximale (221a, 221b, 221c) réduit les seconds points de signaux candidats, qui peuvent être obtenus par une composante imaginaire du signal multiplexé, au second point de signal candidat en sélectionnant le point de signal candidat situé à la distance la plus courte à partir de la composante imaginaire du signal en bande de base complexe.

**4.** Système de communication (1) comprenant :

un dispositif d'émission (10), configuré afin d'émettre une pluralité de signaux multiplexés obtenus en multiplexant une pluralité de signaux de modulation par une matrice de précodage de nombre réel, chacun des signaux de modulation présentant une composante réelle et une composante imaginaire modulées indépendamment l'une de l'autre ; et

le dispositif de réception (20) selon l'une quelconque des revendications 1 à 3, destiné à recevoir un signal émis par le dispositif d'émission (10).

**5.** Procédé destiné à calculer une vraisemblance d'un signal de modulation dans un dispositif de réception (20), le procédé comprenant :

une première étape consistant à recevoir une pluralité de signaux multiplexés, par l'intermédiaire de chemins de propagation orthogonaux les uns aux autres en tant que pluralité de signaux en bande de base complexes, et à diviser chaque signal en bande de base complexe de la pluralité de signaux en bande de base complexes, en une composante réelle et en une composante imaginaire, les signaux multiplexés étant obtenus en multiplexant une pluralité de signaux de modulation par une matrice de précodage de nombre réel, chacun des signaux de modulation présentant une composante réelle et une composante imaginaire modulées indépendamment l'une de l'autre ;

pour chaque signal en bande de base complexe :

une deuxième étape consistant à réduire les points de signaux candidats, qui peuvent être obtenus par une composante réelle du signal multiplexé correspondant au signal en bande de base complexe, à un premier point de signal candidat en utilisant la composante réelle du signal en bande de base complexe ;

une troisième étape consistant à réduire les points de signaux candidats, qui peuvent être obtenus par une composante imaginaire du signal multiplexé correspondant au signal en bande de base complexe, à un second point de signal candidat en utilisant la composante imaginaire du signal en bande de base complexe ;

une quatrième étape consistant à calculer et à délivrer en sortie un premier vecteur de réplique en utilisant le premier point de signal candidat correspondant au signal en bande de base complexe, et à délivrer en sortie les points de signaux candidats situés à la distance la plus courte à partir du premier point de signal candidat, parmi des points de signaux candidats comprenant chaque bit inversé du premier point de signal candidat ; et

une cinquième étape consistant à calculer et à délivrer en sortie un second vecteur de réplique en utilisant le second point de signal candidat correspondant au signal en bande de base complexe, et à délivrer en sortie les points de signaux candidats situés à la distance la plus courte à partir du second point de signal candidat, parmi des points de signaux candidats comprenant chaque bit inversé du second point de signal candidat ; et

le procédé comprenant en outre

une sixième étape consistant à calculer une vraisemblance du signal de modulation en utilisant tous les premiers vecteurs de réplique et les seconds vecteurs de réplique.

**6.** Produit programme informatique comprenant un support non transitoire utilisable par un ordinateur (300b), qui présente un programme pouvant être lu par un ordinateur, qui fait mettre en œuvre par un processeur (300a) inclus dans un circuit de commande (300), toutes les étapes du procédé selon la revendication 5, lorsque le programme pouvant être lu par un ordinateur, est exécuté par le processeur.

# FIG.1

# FIG.2

SIGNAL DETECTION UNIT

200

240

FIRST MAXIMUM-LIKELIHOOD POINT SEARCH UNIT ~220a

FIRST REPLICA-VECTOR CALCULATION UNIT ~230a

SECOND MAXIMUM-LIKELIHOOD POINT SEARCH UNIT ~221a

SECOND REPLICA-VECTOR CALCULATION UNIT ~231a

210

FIRST MAXIMUM-LIKELIHOOD POINT SEARCH UNIT ~220b

FIRST REPLICA-VECTOR CALCULATION UNIT ~230b

s200a

s200b

s200c

SIGNAL DIVISION UNIT

SECOND MAXIMUM-LIKELIHOOD POINT SEARCH UNIT ~221b

SECOND REPLICA-VECTOR CALCULATION UNIT ~231b

LIKELIHOOD CALCULATION UNIT

s201a

s201b

s201c

FIRST MAXIMUM-LIKELIHOOD POINT SEARCH UNIT ~220c

FIRST REPLICA-VECTOR CALCULATION UNIT ~230c

SECOND MAXIMUM-LIKELIHOOD POINT SEARCH UNIT ~221c

SECOND REPLICA-VECTOR CALCULATION UNIT ~231c

EP 3 742 624 B1

# FIG.3

RECEPTION SIGNAL:Re($y_1$)

$[z_1, z_2, z_3]$
$=[1,1,1]$

[1,0,1]  [1,1,0] [0,1,1]  [0,0,1] [1,0,0]  [0,1,0]  ×  [0,0,0]  Re($y_1$)

INVERTED BIT

MAXIMUM
LIKELIHOOD
POINT

EP 3 742 624 B1

# FIG.4

300

300a

| PROCESSOR |
| --- |

300b

| MEMORY |
| --- |

# FIG.5

START

RECEIVE RECEPTION SIGNAL VECTOR — S101

DIVIDE RECEPTION SIGNAL VECTOR, AND OUTPUT REAL COMPONENT OF RECEPTION SIGNAL TO FIRST MAXIMUM-LIKELIHOOD POINT SEARCH UNIT AND OUTPUT IMAGINARY COMPONENT OF RECEPTION SIGNAL TO SECOND MAXIMUM-LIKELIHOOD POINT SEARCH UNIT — S102

NARROW DOWN CANDIDATE SIGNAL POINTS, WHICH ARE OBTAINABLE BY SIGNAL THAT IS ONE OF COMPONENTS OF TRANSMISSION SIGNAL VECTOR, TO CANDIDATE SIGNAL POINT LOCATED AT SHORTEST DISTANCE FROM RECEPTION SIGNAL VECTOR, AND OUTPUT CANDIDATE SIGNAL POINT TO FIRST REPLICA-VECTOR CALCULATION UNIT AND SECOND REPLICA-VECTOR CALCULATION UNIT — S103

CALCULATE REPLICA VECTOR CORRESPONDING TO CANDIDATE SIGNAL POINT HAVING BEEN NARROWED DOWN, AND OUTPUT CALCULATED REPLICA VECTOR TO LIKELIHOOD CALCULATION UNIT — S104

CALCULATE LIKELIHOOD USING REPLICA VECTOR — S105

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018025400 A1

**Non-patent literature cited in the description**

- **YAMAGUCHI KANAKO ; NISHIMOTO HIROSHI ; UMEDA SHUSAKU ; TSUKAMOTO KAORU ; OKAZAKI AKIHIRO ; SANO HIROYASU ; OKAMURA ATSUSHI.** A Study on Reduction in Candidate Signal Points of MLD Decoding in Frequency Encoded Diversity Method. *2016 IEICE Society Conference,* 2016, vol. 5-20, 290